# EUROPÄISCHE PATENTANMELDUNG

(11) **EP 0 856 364 A2**
(43) Veröffentlichungstag der Anmeldung: **05.08.1998**
(21) Anmeldenummer: 98100667.9
(22) Anmeldetag: 16.01.1998
(51) Int. Cl.: B08B 9/04

(54) **Verfahren und Vorrichtung zur Reinigung von Rohrleitungen**

(30) Priorität: 30.01.1997 DE 19703317
(71) Anmelder: Lufthansa Technik AG, 22335 Hamburg (DE)
(72) Erfinder: Steinmüller, Karl-Heinz, 55232 Alzey (DE); Krumtung, Harry, 65428 Rüsselsheim (DE); Pirl, Roland, 64521 Gross-Gerau (DE); Steinmetz, Uwe-Michael, 65207 Wiesbaden/Medenbach (DE); Dittmar, Thomas, 65207 Wiesbaden (DE); Sura, Rudolf, 64546 Mörfelden - Walldorf (DE)
(74) Vertreter: Selting, Günther, Dipl.-Ing.

(57) **Zusammenfassung**

Zur Reinigung einer Rohrleitung (11) wird ein kugelförmiger Reinigungskörper (15) in die Rohrleitung eingebracht, welcher über eine flexible Schlauchleitung (12) mit einer Hochdruck-Flüssigkeitsquelle verbunden ist. Der Hohlkörper weist Düsen (18) auf, aus denen Flüssigkeit mit hohem Druckimpuls gegen die Rohrwand (20) gerichtet wird, um Ablagerungen davon abzusprengen. Die Düsen (18) sind schräg gerichtet, so daß die Flüssigkeitsimpulse einen Vortrieb des Reinigungskörpers (15) in der Rohrleitung (11) bewirken. Der Reinigungskörper zieht daher die Schlauchleitung (12) nach. In einem Rücklauf kann ein anderer Reinigungskörper mit größerem Durchmesser benutzt werden, der an dieselbe Schlauchleitung (12) angeschlossen wird, wobei seine Düsen (18) in die entgegengesetzte Richtung geneigt sind.

## Beschreibung

Die Erfindung betrifft ein Verfahren zur Reinigung von Rohrleitungen und insbesondere der Rohrleitungen von Vakuum-Toilettensystemen in Flugzeugen.

In Abwasser-Rohrleitungen bilden sich Verunreinigungen und Ablagerungen von Urinstein, die die Funktion der Rohrleitung erheblich beeinträchtigen. Daher müßten solche Rohrleitungen in gewissen Zeitabständen gereinigt werden. Bei derartigen Reinigungsvorrichtungen werden in der Regel abrasive Reinigungskörper eingesetzt, die durch die Rohrleitung gezogen werden und mit einer Fräse oder einer anderen Bearbeitungsvorrichtung die Ablagerungen entfernen. Solche Verfahren erfordern einen hohen Einsatz an technischen Hilfsmitteln und Zeit und bei ihnen besteht die Gefahr, daß das Rohrsystem beschädigt wird.

Ein Verfahren, von dem der Oberbegriff des Patentanspruchs 1 ausgeht, ist bekannt aus US 4 819 314. Bei diesem Verfahren wird ein Reinigungskörper, der mit einer Schlauchleitung verbunden ist, durch das zu reinigende Rohr geschickt, wobei er Flüssigkeitsstrahlen ausstößt, die einerseits gegen die Rohrwand gerichtet sind und andererseits auch den Vortrieb des Reinigungskörpers bewirken. Die Austrittsdüsen des Reinigungskörpers sind gegenüber der Mantelfläche deutlich nach innen abgesetzt und die Düsen haben eine erhebliche Neigung zur Längsachse, so daß die Flüssigkeitsstrahlen eine erhebliche Weglänge durchlaufen müssen, bevor sie die Ablagerungen und die Rohrwand erreichen.

In US 1 796 878 ist ein Verfahren zum Reinigen von Rohrleitungen beschrieben, bei welchem ein Reinigungskörper, der schräge Flüssigkeitsstrahlen gegen die Rohrwand richtet, vorgeschoben wird. Die Flüssigkeitsstrahlen bearbeiten den vor dem Reinigungskörper liegenden Rohrbereich, der bereits gesäubert ist, wenn der Reinigungskörper ihn erreicht. Der Durchmesser des Reinigungskörpers ist daher nur geringfügig kleiner als der Innendurchmesser des Rohres.

Aus DE-AS 1 165 945 ist es bekannt, einen Reinigungskörper mit Rückstoßkraft mehrfach durch ein Rohr zu schicken. Dabei muß beim Rücklauf der Reinigungskörper durch einen anderen mit nur vorwärtsgerichteten Düsen ersetzt werden. Daher wird ein Reinigungskörper vorgeschlagen, der sowohl vorwärts als auch rückwärts gerichtete Düsen aufweist. Dieser einheitliche Reinigungskörper wird für sämtliche Durchläufe benutzt. Bei den bekannten Verfahren wird, wenn mehrere Durchläufe durchgeführt werden, stets mit demselben Reinigungskörper gearbeitet. Ein derartiges Reinigungsverfahren hat jedoch eine geringe Effektivität, weil viel Energie innerhalb der Wasserstrahlen verlorengeht.

Der Erfindung liegt die Aufgabe zugrunde, ein Verfahren zum Reinigen von Rohrleitungen anzugeben, um die Rohrreinigung mit großer Reinigungswirkung durchführen zu können.

Die Lösung dieser Aufgabe erfolgt erfindungsgemäß mit dem Verfahren nach Patentanspruch 1.

Bei dem erfindungsgemäßen Verfahren wird in die Rohrleitung ein Hohlkörper eingeführt, dessen maximaler Querschnitt um einige Millimeter kleiner ist als der freie Rohrquerschnitt, wobei der Durchmesser des Reinigungskörpers etwa 2-10 mm kleiner ist als der freie Rohrdurchmesser. Aus dem Hohlkörper treten ringförmig Flüssigkeitsstrahlen aus, die schräg gegen die Rohrwand gerichtet sind und durch den Strahlimpuls Ablagerungen von der Rohrwand absprengen. Diese Ablagerungen werden von der Flüssigkeit durch das Rohrsystem hindurch weggespült. Die schräg gegen die Rohrwand gerichteten Flüssigkeitstrahlen bewirken ferner den Vortrieb des Reinigungskörpers. An Stellen, die dem Reinigungskörper einen höheren Widerstand entgegensetzen, erfolgt ein langsamerer Vortrieb des Reinigungskörpers und eine längere Bearbeitung durch die Hochdruckstrahlen. Dagegen werden solche Stellen des Rohrsystems, an denen sich wenige oder keine Ablagerungen befinden, von dem Reinigungskörper schneller passiert.

Der Druck, mit dem die Flüssigkeit dem Hohlkörper zugeführt wird, ist so bemessen, daß unter Berücksichtigung aller Druckverluste von der Druckquelle bis zum Hohlkörper der Strahldruck den zulässigen Wert für das zu reinigende Rohr nicht überschreitet und der notwendige Wasserdurchfluß gewährleistet ist. Als Druckflüssigkeit kann Wasser benutzt werden. Daher ist das Verfahren umweltfreundlich. Selbst bei stark anhaftenden Ablagerungen kann an metallischen Rohrleitungen eine metallisch reine Rohrinnenfläche hergestellt werden. Da sich der Reinigungskörper unter der Rückstoßwirkung der Düsen in der Rohrleitung selbst vortreibt und dabei die angeschlossene Schlauchleitung nachzieht, ist keine Vortriebsvorrichtung erforderlich.

Gemäß einer bevorzugten Weiterbildung des erfindungsgemäßen Verfahrens werden mindestens zwei Reinigungskörper unterschiedlicher Durchmesser nacheinander durch die Rohrleitung bewegt, wobei die Durchlaufrichtungen zweier aufeinander folgender Durchläufe einander entgegengesetzt sind und für alle Durchläufe der jeweilige Reinigungskörper mit derselben Schlauchleitung an die Hochdruckquelle angeschlossen wird. Hierbei unterscheiden sich die Reinigungskörper dadurch, daß sie bei einem Durchlauf die Schlauchleitung nachziehen und bei dem nächsten Durchlauf sich in Richtung auf die Schlauchleitung zubewegen, so daß die Schlauchleitung entsprechend dem Vortrieb aus der Rohrleitung herausgezogen werden muß.

Das erfindungsgemäße Verfahren eignet sich insbesondere - jedoch nicht ausschließlich - zum Reinigen metallischer Rohrleitungen, wie sie in dem Vakuum-Toilettensystem von Flugzeugen vorhanden sind. Derartige Rohrleitungen erstrecken sich in Längsrichtung durch das Flugzeug und sie können an beiden Enden geöffnet werden.

Die Erfindung betrifft ferner eine Vorrichtung zur Reinigung von Rohrleitungen. Diese Vorrichtung weist einen als Hohlkörper ausgebildeten Reinigungskörper auf, der mit zahlreichen nach außen gerichteten Düsen versehen ist, aus denen Flüssigkeit mit hohem Druck austritt.

Erfindungsgemäß beträgt die Anzahl der in einem Kreis angeordneten Düsen mindestens zehn, vorzugsweise mindestens 20 und insbesondere mindestens 30. Die Düsen sind also in einer großen Zahl vorhanden, so daß die von Ihnen erzeugten Wasserstrahlen nahe aneinanderliegen. Dadurch wird erreicht, daß Schmutz, der am Rohr haftet, vollständig abgetragen wird und daß keine Furchenbildung entsteht.

Im folgenden wird unter Bezugnahme auf die Zeichnungen ein Ausführungsbeispiel der Erfindung näher erläutert.

Es zeigen:
- Fig. 1: die Reinigung der Rohrleitung eines Vakuum-Toilettensystems eines Flugzeuges,
- Fig. 2: einen Längsschnitt durch einen Reinigungskörper, der sich durch die Rohrleitung bewegt,
- Fig. 3: eine Stirnansicht des Reinigungskörpers nach Fig. 2,
- Fig. 4: eine weitere Ausführungsform eines Reinigungskörpers, der sich in entgegengesetzter Richtung wie in Fig. 2 durch die Rohrleitung bewegt,
- Fig. 5: das Flugzeug nach Fig. 1 nach Beendigung des ersten Durchlaufs und vor Beginn des in Gegenrichtung erfolgenden zweiten Durchlaufs und
- Fig. 6: das gleiche Flugzeug während des zweiten Durchlaufs des Reinigungskörpers durch die Rohrleitung.

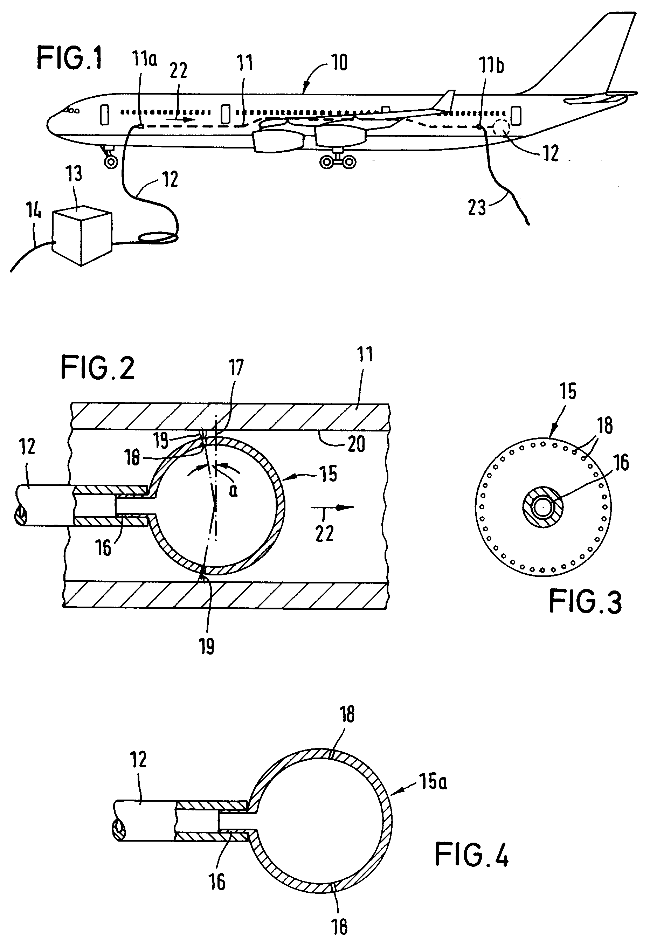

Das in Fig. 1 dargestellte Flugzeug 10 weist im Innern seines Rumpfes eine Rohrleitung 11 auf, die aus Metallrohren besteht und die im Flugzeug befindlichen Toiletten mit dem Entsorgungstank 12 verbindet. Der Schmutz wird aus den Toiletten durch Vakuumwirkung in den Entsorgungstank 12 befördert.

Zur Reinigung der Rohrleitung 11 werden die beiden Enden 11a,11b der Rohrleitung freigelegt bzw. geöffnet. In das vordere Ende 11a wird der Reinigungskörper eingeführt, der mit einer flexiblen Schlauchleitung 12 verbunden ist, welche an eine Flüssigkeits-Hochdruckquelle 13 angeschlossen ist. Der Hochdruckquelle 13 wird über einen Wasserzulauf 14 Wasser zugeführt. Die Hochdruckquelle 13 enthält eine Pumpe, die einen Druck von etwa 100 bar - 400 bar erzeugt. Der Schlauch 12 ist ein Druckschlauch, der diesem Druck standhalten kann.

In Fig. 2 ist der Reinigungskörper 15 dargestellt, der in die Rohrleitung 11 eingeführt ist. Dieser Reinigungskörper 15 besteht aus einem kugelförmigen Hohlkörper, der einen mit dem Schlauch 12 verbundenen Schlauchanschluß 16 aufweist. Der Schlauchanschluß 16 bildet einen sich entlang der Rohrachse ausrichtenden Pol, während der Äquator 17 des kugelförmigen Reinigungskörpers 15 sich quer zur Rohrachse einstellt.

In der Wand des Reinigungskörpers 15 sind zahlreiche Düsen 18 von 0,5 mm Durchmesser ausgebildet, die radial nach außen gerichtet sind und die kreisförmig auf einem Breitengrad angeordnet sind, dessen Breitenwinkel a 10° beträgt. Die Düsen 18 sind bei dem Ausführungsbeispiel von Fig. 2 auf derjenigen Halbkugel angeordnet, deren Pol von dem Schlauchanschluß 16 gebildet wird. Die aus den Düsen 18 austretenden Wasserstrahlen 19 sind somit schräg gegen die Rohrwand 20 gerichtet, und zwar mit einer Komponenten, die parallel zur Richtung des Schlauchanschlusses 16 weist. Die Strahlen 19 sprengen somit von der Rohrwand 20 Ablagerungen ab und sie bewirken ferner wegen ihrer axial zum Rohr gerichteten Komponenten einen Vortrieb in Richtung des Pfeiles 22. Der Winkel a beträgt generell 10-15°.

Aus Fig. 2 ist erkennbar, daß der Reinigungskörper 15 einen Durchmesser hat, der die Ausbildung von Strahlen 19 außerhalb des Reinigungskörpes erlaubt. Dieser Durchmesser ist um 2-10 mm kleiner als der freie Rohrdurchmesser bzw. der Durchmesser der Ablagerungen.

Nachdem der Reinigungskörper 15 mit dem daran befestigten Schlauch 12 in das Ende 11a der Rohrleitung 11 gemäß Fig. 1 eingeführt wurde, bewegt er sich infolge des Wasserdrucks in der Rohrleitung fort bis zum rückwärtigen Ende 11b. Dieses Ende 11b ist von dem Entsorgungstank 1 abgekoppelt und mit einer Abflußleitung 23 verbunden worden, durch die das Wasser aus dem Rohrleitungssystem abgeführt wird. Während der Rohrreinigung wird die Abflußleitung 23 mit einer Saugquelle verbunden, um Wasser und Schmutz aus der Rohrleitung abzusaugen.

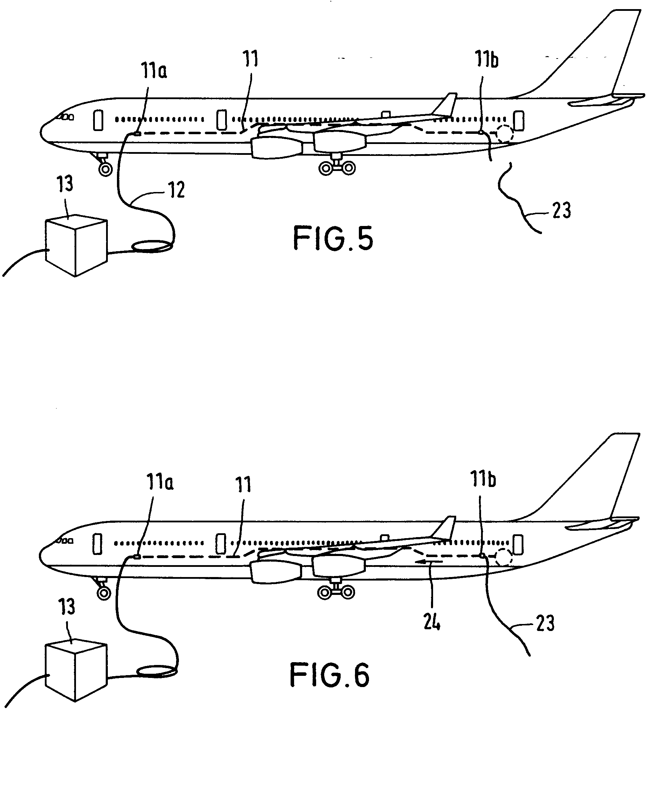

Wenn der Reinigungskörper 15 an dem rückwärtigen Ende 11b der Rohrleitung 11 angekommen ist, wird er von dem Schlauch 12 getrennt und durch einen anderen (größeren) Reinigungskörper ersetzt, der in Fig. 4 dargestellt ist. Dieser Reinigungskörper 15a unterscheidet sich von dem Reinigungskörper 15 der Fig. 2 ferner dadurch, daß die Düsen 18 auf einem Breitengrad angeordnet sind, der - bezogen auf den Äquator 17 - auf derjenigen Halbkugel liegt, die dem Schlauchanschluß 16 abgewandt ist. Diese Düsen 18 treiben mit den aus ihnen austretenden Wasserstrahlen 19 den Reinigungskörper 15a in Richtung auf den Schlauchanschluß 16, so daß der Reinigungskörper 15a sich gemäß Fig. 6 in Richtung des Pfeiles 24 von dem Ende 11b zum Ende 11a der Rohrleitung 11 bewegt. Dabei wird der Schlauch 12 aus der Rohrleitung herausgezogen. Während des Einsatzes des Reinigungskörpers 15a ist wiederum die Abflußleitung 23 an das Ende 11b angeschlossen.

In beiden Fällen arbeitet sich der Reinigungskörper mit dem Schlauch 12, bedingt durch die axiale Impulskomponente, in der Rohrleitung selbst in Reinigungsrichtung vor. Zum Herausziehen des Reinigungskörpers aus der Rohrleitung wird einfach die Wasserzufuhr unterbrochen. Nach jedem Durchlauf kann der nächstgrößere Reinigungskörper mit dem Schlauch verbunden werden. Der Einsatz eines Reinigungskörpers mit bestimmtem Durchmesser wird von dem jeweiligen freien Rohrdurchmesser abhängig gemacht. Der größte verwendete Reinigungskörper hat einen um 10 mm geringeren Durchmesser als der Rohrinnendurchmesser.

## Patentansprüche

1. Verfahren zur Reinigung von Rohrleitungen, bei dem ein Reinigungskörper (15) durch die Rohrleitung (11) bewegt wird, wobei als Reinigungskörper (15) ein durch eine Schlauchleitung (12) an eine Flüssigkeits-Hochdruckquelle (13) angeschlossener Hohlkörper benutzt wird, aus dem ringförmig Flüssigkeitsstrahlen (19) austreten, die mit einer der Bewegungsrichtung des Reinigungskörpers (15) entgegengerichteten Komponente schräg gegen die Rohrwand (20) gerichtet sind, wobei die Flüssigkeitsstrahlen (19) die Rohrwand reinigen und den Vortrieb des Reinigungskörpers (15) bewirken,
**dadurch gekennzeichnet,**
daß bei jedem Durchlauf eines Reinigungskörpers (15) durch die Rohrleitung (11) ein Reinigungskörper gewählt wird, dessen maximaler Durchmesser um einige Millimeter kleiner ist als derjenige des freien Rohrquerschnittes.

2. Verfahren nach Anspruch 1, dadurch gekennzeichnet, daß Reinigungskörper (15,15a) unterschiedlicher Durchmesser nacheinander durch die Rohrleitung (11) bewegt werden, wobei die Durchlaufrichtungen zweier aufeinanderfolgender Durchläufe einander entgegengesetzt sind und für alle Durchläufe der jeweilige Reinigungskörper (15,15a) mit derselben Schlauchleitung (12) an die Hochdruckquelle (13) angeschlossen wird.

3. Vorrichtung zur Reinigung von Rohrleitungen, mit einem in die Rohrleitung (11) einführbaren Reinigungskörper (15), wobei der Reinigungskörper (15) ein durch eine Schlauchleitung (12) an eine Flüssigkeits-Hochdruckquelle (13) angeschlossener Hohlkörper ist, der an einem Ende einen Schlauchanschluß (16) aufweist und mit nach außen gerichteten Düsen (18) versehen ist, die mit einer parallel zu dem Schlauchanschluß (16) gerichteten Komponente schräg nach außen weisen und eine kegelförmige Anordnung von Strahlen (19) erzeugen,
**dadurch gekennzeichnet,**
daß die Anzahl der in einem Kreis angeordneten Düsen (18) mindestens zehn beträgt.

4. Vorrichtung nach Anspruch 3, dadurch gekennzeichnet, daß die Düsen (18) mit einer Komponente verlaufen, die in Richtung des Schlauchanschlusses (16) gerichtet ist.

5. Vorrichtung nach Anspruch 3, dadurch gekennzeichnet, daß die Düsen (18) mit einer Komponente verlaufen, die entgegen der Richtung des Schlauchanschlusses (16) gerichtet ist.

6. Vorrichtung nach einem der Ansprüche 3-5, dadurch gekennzeichnet, daß der Hohlkörper halbkugelförmige Stirnwände aufweist.

7. Vorrichtung nach Anspruch 6, dadurch gekennzeichnet, daß der Hohlkörper eine Kugel ist.
